# EUROPÄISCHE PATENTSCHRIFT

(11) **EP 1 794 571 B1**
(45) Veröffentlichungstag und Bekanntmachung des Hinweises auf die Patenterteilung: **18.03.2009**
(21) Anmeldenummer: 05783965.6
(22) Anmeldetag: 14.09.2005
(51) Int. Cl.: G01N 21/39, G01N 21/35

(54) **VERFAHREN ZUM MESSEN MINDESTENS EINER GASKOMPONENTE**
METHOD FOR MEASURING AT LEAST ONE GAS COMPONENT
PROCÉDÉ DE MESURE D'AU MOINS UN CONSTITUANT GAZEUX

(30) Priorität: 14.09.2004 DE 102004044409
(43) Veröffentlichungstag der Anmeldung: 13.06.2007
(73) Patentinhaber: Fraunhofer-Gesellschaft zur Förderung der angewandten Forschung e.V., 80686 München (DE); Micropelt GmbH, 79110 Freiburg (DE)
(72) Erfinder: BRAUN, Marcus, 79199 Kirchzarten (DE); WÖLLENSTEIN, Jürgen, 79106 Freiburg (DE); BÖTTNER, Harald, 79108 Freiburg (DE); LAMBRECHT, Armin, 79232 March (DE); NUMUS, Joachim, 79395 Neuenburg-Zienken (DE); SCHUBERT, Axel, 81543 München (DE)
(74) Vertreter: Pfenning, Meinig & Partner GbR
(86) Internationale Anmeldenummer: PCT/EP2005/009897
(87) Internationale Veröffentlichungsnummer: WO 2006/029848

(56) Entgegenhaltungen:
- WO-A-02/073757
- WO-A-20/04061957
- DE-A1- 3 935 610
- DE-A1- 4 429 582
- DE-A1- 10 308 409
- US-A- 4 730 112
- US-A- 5 625 189
- US-A- 5 680 410
- US-A1- 2002 043 364
- US-A1- 2002 071 463
- US-B1- 6 538 728
- PATENT ABSTRACTS OF JAPAN Bd. 017, Nr. 269 (P-1544), 25. Mai 1993 (1993-05-25) & JP 05 010876 A (TOKYO GAS CO LTD), 19. Januar 1993 (1993-01-19)

## Beschreibung

Die Erfindung betrifft ein Verfahren zum Messen mindestens einer Gaskomponente eines in einem Messraum vorhandenen Gases nach dem Oberbegriff des Hauptanspruchs.

Zur spektroskopischen Bestimmung einer Gaskomponente, z.B. hinsichtlich ihrer Konzentration in einem zu messenden Gas ist es vorteilhaft, wenn die verwendete Lichtquelle, die eine durch das Gas gesandte Strahlung emittiert, in ihrer Emissionsfrequenz verändert werden kann, da durch Überstreichen eines größeren Wellenlängenbereichs der Erfassungsbereich vergrößert werden kann. Im Stand der Technik ist es bekannt, die Änderung der Emissionsfrequenz durch Verändern des Versorgungsstroms der Lichtquelle zu erreichen. Durch die Stromänderung wird eine Temperaturänderung z.B. der aktiven Zone eines Lasers bewirkt und damit eine Abstimmung der Wellenlänge der Lichtquelle. Ein Nachteil dieses Verfahrens zur Emissionsfrequenzänderung ist die mit der Abstimmung einhergehende Intensitätsmodulation. Außerdem ist der Abstimmbereich, der durch den Laserschwellenstrom im Falle der Verwendung eines Lasers und dem Maximalstrom bestimmt wird, beschränkt. Zudem verkürzt das Modulieren des Laserstroms bis in den Grenzbereich der Spezifikationen die Lebensdauer der Lichtquelle.

Der Erfindung liegt daher die Aufgabe zugrunde, ein Verfahren zum Messen mindestens einer Gaskomponente zu schaffen, das eine Änderung der Emissionsfrequenz der verwendeten Strahlenquelle mit einer kleinen Zeitkonstanten und einem zufriedenstellenden Abstimmbereich ermöglicht, wobei die Lebensdauer der Strahlungsquelle nicht vermindert wird.

Diese Aufgabe wird erfindungsgemäß durch die kennzeichnenden Merkmale des Hauptanspruchs in Verbindung mit den Merkmalen des Oberbegriffs gelöst.

Dadurch, dass zur Änderung der von der Strahlungsquelle emittierten Wellenlänge die Strahlungsquelle auf einen miniaturisierten thermoelektrischen Bauteil, z.B. einem miniaturisierten Peltier-Kühler, angeordnet ist dessen elektrische Versorgung variabel einstellbar ist, ist es möglich, eine sehr schnelle thermische Modulation der Temperatur der Licht- oder Strahlungsquelle mit Temperaturänderungen von 10 - 70 K, z.B. in einem Zeitbereich 1 ms - 50 ms zu erreichen. Aufgrund der Temperaturabhängigkeit der Emissionswellenlänge der Lichtquelle wird damit eine entsprechende Abstimmung bzw. Modulation der Emissionswellenlänge erreicht. Dabei ist im Vergleich zu einer Strommodulation nachdem Stand der Technik die auf tretende Intensitätsänderung wesentlich geringer.

Durch die in den Unteransprüchen angegebenen Maßnahmen sind vorteilhafte Weiterbildungen und Verbesserungen möglich.

Als Detektor zur Erfassung der durch das Messgas hindurchgehenden Strahlung kann mindestens eine Fotodiode, eine Pyro-, Thermopile, ein Bolometer oder ein MCT-Detektor verwendet werden, wobei die Art des Detektors nach dem Emissionsbereich der Lichtquelle ausgewählt werden kann.

In vorteilhafte Weise ist die Strahlungsquelle als Halbleiterlaser oder als LED, vorzugsweise als Oberflächen emittierender Halbleiterlaser ausgebildet. Vorteilhaft bei dieser Anwendung ist, dass solche Laser geringe Betriebsleistung erfordern, so dass auch durch ein miniaturisiertes thermoelektrisches Element eine ausreichende Kühlleistung aufgebracht werden kann. Als Halbleiterlaser können auch Kantenemitter mit oder ohne DFB-Struktur oder Quantenkaskadenlaser verwendet werden. Die Abstrahlungswellenlänge wird entsprechend dem zu messenden Gas gewählt.

Zur Auswertung der Signale des Detektors bezüglich der Gaskomponente und zur Steuerung/Regelung der Temperatur des miniaturisierten thermoelektrischen Bauteils ist eine Auswerte- und Steuer-/Regeleinrichtung vorgesehen, wobei vorteilhafterweise die Auswerteeinrichtung eine elektronische Signalanalyse bzw. eine multivariante Datenanalyse umfaßt und die Steuerung/Regelung der Temperatur des miniaturisierten thermoelektrischen Bauteils durch einen Puls- oder Modulationsbetrieb des Versorgungsstroms durchgeführt wird. In vorteilhafter Weise wird auch die Strahlungsquelle im Modulationsbetrieb d. h. geregelt oder gesteuert versorgt. Die Modulation und Abstimmung des Stroms für den Mikrokühlers und des Stroms für die Strahlungsquelle erfolgt so, dass die Änderung der Wellenlänge mit der Temperatur möglichst konstant ist und Intensität der Strahlungsquelle möglichst konstant ist oder sich gleichmäßig ändert.

Durch die periodische Modulation des Stroms durch das thermoelektrische Elemente kann eine Auswertung des Signals mit Hilfe einer Fourieranalyse (FFT) erfolgen. Vorteilhaft für hohe Messraten ist hierbei eine geeignete Wahl des Modulationsstroms des Kühlers und eine zusätzliche Modulation des Laserstroms derart, dass die Änderung der Wellenlänge sowie der emittierten Intensität des Lasers so erfolgt, dass sie bei der FFT als Fundamentalkomponente auftritt und die Änderungen der im Gas zu messenden Parameter wie Konzentration, Druck und Temperatur aus den Anteilen der höheren Harmonischen extrahiert werden.

Entsprechend einem vorteilhaften Ausführungsbeispiel ist ein Array aus mehreren Strahlungsquellen mit unterschiedlichen Emissionswellenlängen vorgesehen, dabei können die Emissionswellenlängen der Strahlungsquellen zueinander derart verschoben sein, dass die durch Modulation des Stroms durch das thermoelektrische Bauteil hervorgerufenen Abstimmbereiche im Wesentlichen nebeneinander liegen. Vorteilhaft ist dabei, dass ein weiter Bereich einer Absorptionsbande des zu messenden Gases erfaßt wird und damit eine Auswertung mit schneller Fourieranalyse durchführbar ist.

Wenn die Wellenlängen des Arrays mit Lasern weit auseinander liegen, können bei Gasen weit auseinander liegende Banden genutzt werden, um so eine bessere Differenzierung gegen andere Gase zu ermöglichen. Die Identifizierung in mindestens zwei Wellenlängenbereichen dient dabei zur Erhöhung der Sicherheit.

In vorteilhafter Weise wird auf der Kaltseite des als miniaturisiertem Peltier-Kühler ausgebildeten thermoelektrischen Bauteils mindestens ein Temperatursensor und/oder ein Heizelement, z.B. in Form ein Dünnschichtelements aufgebracht. Dies führt zu einer schnellen Modulierbarkeit der Lichtquelle, da der Widerstandsheizer ein sehr schnelles Aufheizen der Kaltseite des Mikrokühlers bzw. der darauf angebrachten Strahlungsquelle ermöglicht. Damit kann eine schnelle und genaue Regelung durchgeführt werden.

Um die Kühlleistung und die nutzbare Temperaturdifferenz zu erhöhen, ist die Heißseite des miniaturisierten Peltier-Kühlers auf einer Kühlvorrichtung angeordnet, die als konventionelle Kühlvorrichtung, z.B. als handelsüblicher normaler Peltier-Kühler ausgebildet sein kann.

Zur Reduzierung der Wärmekapazität und des Wärmewiderstandes sowie zur besseren Wärmeübertragung kann auf der Kaltseite des miniaturisierten Peltier-Kühlers sein Substrat auf eine Dicke von 50 - 100 µm abgedünnt sein und/oder das Substrat der als Halbleiterlaser ausgebildeten Strahlungsquelle abgedünnt sein und/oder das Substrat der Strahlungsquelle selbst die Kaltseite des Peltier-Kühlers bilden und/oder die als Halbleiterlaser ausgebildete Strahlungsquelle substratfrei auf die Kaltseite des Peltier-Kühlers aufgebracht werden. Schließlich kann in vorteilhafter Weise die Kaltseite des Mikrokühlers zur besseren thermischen Ankopplung eine Vertiefung in den Abmessungen der Strahlungsquelle in der Größenordnung von 20 bis 200 µm zur Aufnahme derselben vorgesehen sein.

Eine schnelle Modulierbarkeit der Lichtquelle wird auch erreicht, wenn diese als Infrarotlaser oder - leuchtdiode ausgebildet ist.

Wenn gleichzeitig mehrere Gase gemessen werden sollen, kann in vorteilhafter Weise ein Array aus Mikrokühlern mit Strahlungsquellen bei unterschiedlichen Emissionswellenlängen genutzt werden.

Ein vorteilhaftes Ausführungsbeispiel kann darin gesehen werden, wenn auf der Kaltseite des miniaturisierten Peltier-Kühlers eine keilförmige oder stufenförmige Struktur vorgesehen wird, die vorteilhafterweise aus einem Material mit einer geringen thermischen Leitfähigkeit besteht und auf der sich ein Array gleichartiger Laser befindet. Durch die Struktur wird ein Temperaturgradient beim Aufheizen und Abkühlen erzeugt, der ein serielles Überstreichen von einzelnen Gasabsorptionslinien gestattet. Diese Ausführung erhöht bei entsprechender Auswertung die Messgenauigkeit.

Ausführungsbeispiele der Erfindung sind in der Zeichnung dargestellt und werden in der nachfolgenden Beschreibung näher erläutert. Es zeigen:
- Fig. 1: eine schematische Anordnung einer bei dem erfindungsgemäßen Verfahren verwendeten Gas- messvorrichtung,
- Fig. 2: die Ausgangsspannung des Detektors über die Zeit,
- Fig. 3: eine Signalkurve der Stromversorgung des Peltierkühlers sowie eine Ausgangssignalkur- ve des Detektors entsprechend Fig. 2 in ver- größertem Zeitmaßstab, und
- Fig. 4: eine bei dem erfindungsgemäßen Verfahren verwendete Lichtquellenanordnung auf einem miniaturisierten Peltier-Kühler.

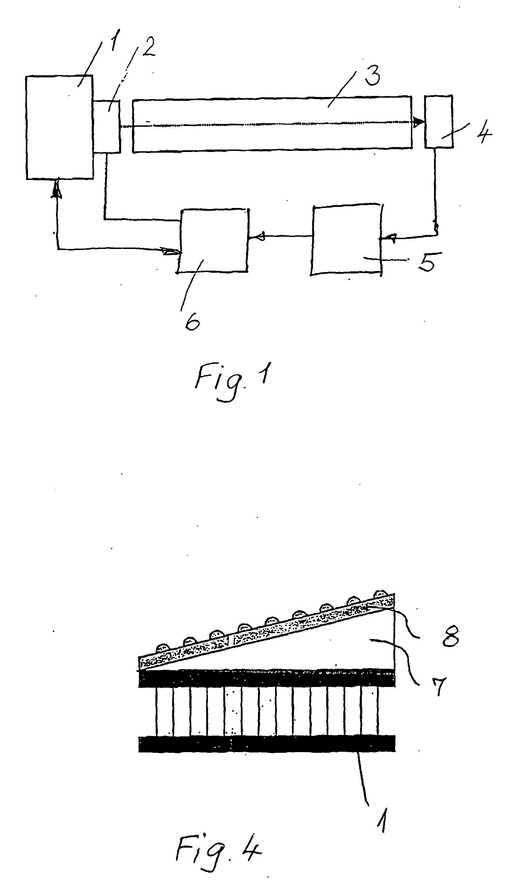

In Fig. 1 ist eine bei dem erfindungsgemäßen Verfahren verwendete Gasmessvorrichtung dargestellt, die einen Peltier-Kühler 1 aufweist, auf dessen Kaltseite eine Strahlungsquelle 2, z.B. durch Kleben oder Löten aufgebracht ist. Die Strahlung der Strahlungsquelle 2 ist so gerichtet, dass sie durch eine mit Gas gefüllte Messkuvette 3 geleitet wird, wobei am Ausgang der Messkuvette 3 ein Strahlungsdetektor 4 angeordnet ist, der die transmittierte Strahlung erfasst und in ein elektrisches Signal umwandelt. Der Detektor 4 ist mit einer Auswerteeinrichtung 5 für die erfassten Signale verbunden. Weiterhin ist eine Steuer-und/oder Regeleinrichtung 6 vorgesehen, die mit der Auswerteeinrichtung 5 verbunden sein kann und die den Peltier-Kühler 1 und die Strahlungsquelle 2 steuert bzw. regelt.

Der miniaturisierte Peltier-Kühler ist vorzugsweise mit einem Verfahren der Dünnschichttechnik auf Waferbasis hergestellt und eine weist eine Kaltseite, auf der die Strahlungsseite aufgebracht ist und der Kaltseite entgegengesetzt eine Heißseite auf. Die Kaltseite besteht beispielsweise aus Silizium. Zur Reduzierung der Wärmekapazität und des Wärmewiderstands kann die Kaltseite des Mikrokühlers auf eine Dicke 50 - 100 µm abgedünnt sein.

Als Strahlungsquelle wird je nach Ausführung ein Laser oder eine LED, vorzugsweise ein Oberflächen emittierender Halbleiterlaser (VCSEL) verwendet. Um eine gute Wärmekopplung zu erzielen kann insbesondere bei einem Oberflächen emittierenden Halbleiterlaser dessen Substrat selbst die Kaltseite des Peltier-Kühlers bilden. Das Substrat des VCSEL, z.B. GaAs, kann abgedünnt sein oder der Halbleiterlaser kann z.B. mittels Lift-off Verfahren substratfrei präpariert und dann auf die Kaltseite des Peltier-Kühlers aufgebracht sein.

Der Detektor 4 ist als Fotodiode ausgebildet, er kann jedoch auch je nach Anwendung als Pyropile, Thermopile, Bolometer oder als MCT-Detektor (Quecksilber, Cadmium Tellurit) ausgeführt sein.

Der miniaturisierte Peltier-Kühler wird von der Steuer/Regeleinrichtung 6 vorzugsweise im Puls- oder Wechselbetrieb mit periodischem Strom versorgt, wodurch eine schnellere Temperaturänderung an der Kaltseite des Peltier-Kühlers auftritt.

Die Temperaturänderung der Kaltseite des Peltier-Kühlers 1 wird direkt auf die Strahlungsquelle 2 übertragen. Aufgrund der Temperaturabhängigkeit der Emissionswellenlänge der Lichtquelle ändert diese mit der Temperaturänderung des Peltier-Kühlers ihre Emissionswellenlänge, wodurch eine Abstimmung bzw. Modulation in einem durch die Temperaturänderung begrenzten Emissionswellenlängenbereich erreicht wird. Beispielsweise kann sich die Lichtquellentemperatur ausgehend von Zimmertemperatur im Bereich von 10 - 70 K in 1 ms bis 50 ms ändern, dies entspricht beispielsweise bei einem VCSEL einem Wellenlängenbereich zwischen 759 und 762 nm. Dieser Wellenlängenbereich kann z.B. für die Messung von Sauerstoff verwendet werden.

Die von der Strahlungsquelle ausgesandte, über einen Wellenlängenbereich modulierte Strahlung wird nach Transmission durch das in der Messkuvette 3 enthaltene Gas von dem Detektor 4 empfangen und in entsprechende Signale umgewandelt, die an die Auswerteeinrichtung 5 geleitet werden. Für eine möglichst genaue Auswertung der Detektorsignale, die zudem mit geringem Aufwand an Elektronik/Software geschehen soll, wird die Gasmessvorrichtung mit einer periodischen Wellenlängenmodulation im Frequenzbereich von 1 Hz bis 1kHz betrieben, wobei während einer Periode eine oder mehrere Gasabsorptionslinien oder sogar eine ganze Bande beim Abkühlen und Erwärmen weitgehend hysteresefrei überstrichen werden. Dabei sollte die gemessene Intensität während einer Periode ohne Gas konstant sein oder in zumindest einer definierten Weise, z.B. sinusförmig, moduliert werden.

Die Auswerteeinrichtung nimmt bei einer derartigen Wellenlängenmodulation die Auswertung der Gaskonzentrationen und andere Parameter wie Temperatur und Druck über eine elektronische Signalanalyse vor. Dazu kann eine schnelle Fourieranalyse verwendet werden. Eine Fourierkomponente des Signals stellt beispielsweise die Intensitätsmodulation des Signals ohne Gas dar, die gasspezifischen Parameter, wie Gaskonzentration, Temperatur und Druck können über höhere harmonische Anteile im Signal extrahiert werden. Unter anderem ist damit auch ein einfacher Gasnachweis über eine analoge oder digitale Schmalbandfilterung der entsprechenden Signalkomponenten möglich.

Eine andere Auswertung ist ein phasenstarres Nachweisverfahren mittels "Lock in"-Technik, bei dem die Gaslinien anhand ihrer Phasenlage in Bezug auf die Grundmodulation erkannt werden können und nach relevanten Parametern, wie die Konzentration bestimmt werden können.

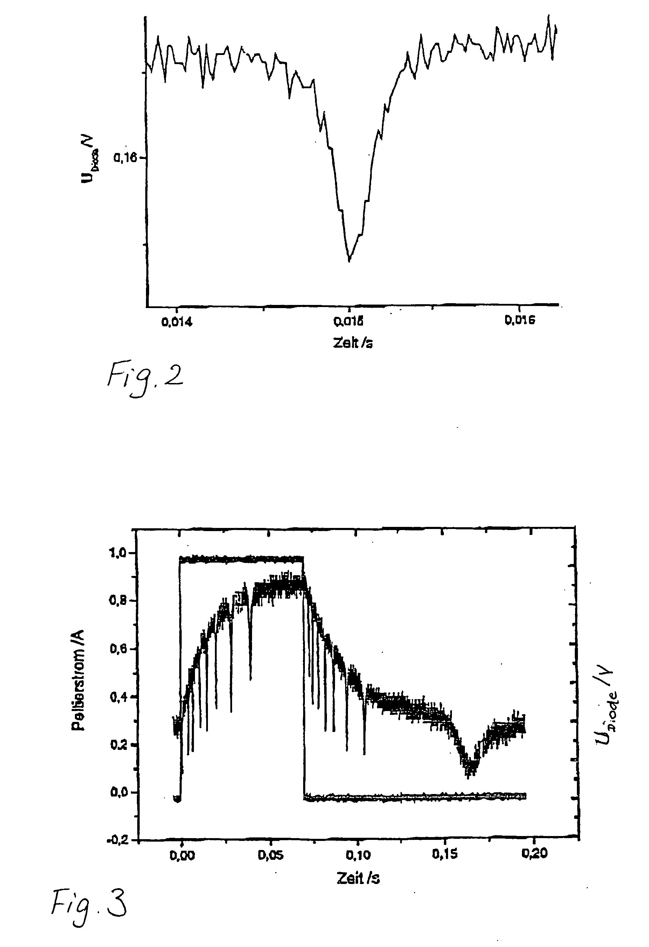

Bei der Aufnahme mehrerer Absorptionslinien besteht die Möglichkeit der Druck- und Temperaturmessung aus Form und relativer Intensität der Absorptionslinien (siehe Fig. 3).

In Fig. 2 und Fig. 3 ist das Ausgangssignal des Detektors 4 dargestellt, der die durch die Messküvette 3 hindurchgehende Strahlung erfasst. Dabei ist der Zeitmaßstab in der Fig. 3 gerafft. Außerdem ist in Fig. 3 der Versorgungsstrom des Peltier-Kühlers dargestellt, der in diesem Beispiel rechteckförmig ist. Wie aus den Kurven zu erkennen ist, ändern sich mit der Abkühlung (links) und Aufheizung (rechts) sowohl die Intensität der Strahlungsquelle als auch der Abstand der Absorptionslinien, die als negative Peaks zu erkennen sind.

In einem bevorzugten Ausführungsbeispiel wird nun mittels einer spannungsgesteuerten Stromquelle (Steuereinheit 6) der Mikrokühler angesteuert, wobei der Stromverlauf (Form und Frequenz) so eingestellt ist, dass die Änderung der Wellenlänge mit der Temperatur und der Linienabstand der Absorptionslinien möglichst konstant sind. Dazu wird auch, wie bereits erwähnt, der Betriebsstrom der Strahlungsquelle so geregelt, dass die Intensitätsänderung möglichst gering oder möglichst gleichmäßig (z. B. sinusförmig) ist.

Der Stromverlauf für den Kühler 1 und der Betriebsstrom für die Strahlungsquelle wird dabei vorher abgestimmt und in einem Speicher abgelegt oder durch einen Funktionsgenerator geliefert, die Bestandteil der Steuer- und Regeleinheit 6 sind.

Aus der Periode der Absorptionslinien kann dann die Gaskonzentration und aus ihrem Abstand der Gasdruck bestimmt werden.

In einem anderen Ausführungsbeispiel ist ein zweiter, mit der Strahlung der Strahlungsquelle 1 versorgter Messkanal mit zugeordnetem Detektor vorgesehen, in dem kein Gas enthalten ist, wobei der Strom zum Mikrokühler und der Betriebsstrom der Strahlungsquelle so geregelt wird, dass das Detektorsignal des zweiten Messkanals z. B. eine saubere Sinusform aufweist.

Die Kaltseite des Mikrokühlers 1 kann mit einem Temperatursensor und einer Heizung, z.B. in Form eines Dünnschichtelements, z.B. aus Platin versehen sein, wobei die Signale an die Steuer/Regeleinrichtung 6 geleitet werden. Abhängig von den Signalen des Temperatursensors kann die Versorgung entsprechend eingestellt werden, so dass eine schnelle und genaue Temperaturregelung erreicht wird.

In Fig. 4 ist eine weitere Ausführungsform eines Peltier-Kühlers 1 mit Strahlungsquelle 3 vorgesehen, wobei auf die Kaltseite des Mikrokühlers 1 eine keilförmige Struktur z.B. aus Siliziumdioxid SiO₂ oder Al₂O₃ aufgebracht werden. Auf dieser keilförmigen Struktur ist ein Array 8 gleichartiger Laser aufgebracht. Über die Fläche der keilförmigen Struktur 7 entsteht so ein Temperaturgradient, wodurch die Laser bei unterschiedlichen Wellenlängen abstrahlen. Beim Aufheizen und Abkühlen werden so die einzelnen Gasabsorptionslinien seriell überstrichen. Selbstverständlich kann die Struktur auch eine andere Form z.B. eine Stufenform aufweisen.

## Patentansprüche

1. Verfahren zum Messen mindestens einer Gaskomponente eines in einem Messraum vorhandenen Gases mit mindestens einer Strahlungsquelle, die bezüglich ihres Wellenlängenbereichs an die zu erfassende Gaskomponente angepasst ist, mindestens einem Strahlungsdetektor, der eine von der Strahlungsquelle ausgesandte und durch das Gas im Messraum hindurchgehende Strahlung empfängt und in elektrische Signale umwandelt, und einer Auswerteeinrichtung (5) zur Auswertung der elektrischen Signale bezüglich der Gaskomponente, wobei zur Änderung der von der Strahlungsquelle (2) emittierten Wellenlänge die Strahlungsquelle auf einem miniaturisierten thermoelektrischen Bauteil aufgebracht wird, das mit einer Steuer/Regeleinrichtung (6) zur variablen Einstellung seiner elektrischen Versorgung verbunden ist, **dadurch gekennzeichnet, dass** die Steuer/Regeleinrichtung ausgebildet ist, den Strom durch das thermoelektrische Bauteil (1) periodisch zu modulieren und den Strom durch die Strahlungsquelle (2) zu modulieren, derart, dass die Änderung der Wellenlänge sowie der Intensität der Lichtquelle in der Weise durchgeführt wird, dass sie bei einer schnellen Fourieranalyse als Fundamentalkomponente auftritt und die Änderungen der im Gas zu messenden Parameter Konzentration und/oder Druck und/oder Temperatur aus den Anteilen der höheren Harmonischen extrahiert werden, wobei bei der Änderung der Wellenlänge mehrere Gasabsorptionslinien überstrichen werden.

2. Verfahren nach Anspruch 1, **dadurch gekennzeichnet, dass** als thermoelektrisches Bauteil ein miniaturisierter Peltier-Kühler (1) verwendet wird.

3. Verfahren nach Anspruch 1 oder Anspruch 2, **dadurch gekennzeichnet, dass** der Detektor (4) ausgewählt wirf aus Fotodiode, Pyro-, Thermopile, Bolometer oder MCT-Detektor.

4. Verfahren nach einem der Ansprüche 1 bis 3, **dadurch gekennzeichnet, dass** für die mindestens eine Strahlungsquelle (2) ein Halbleiterlaser, vorzugsweise ein Oberflächen emittierender Halbleiterlaser, ein Quantenkaskadenlaser, ein Kantenemitter mit oder ohne DFB-Struktur oder eine LED ausgewählt wird.

5. Verfahren nach einem der Ansprüche 1 bis 4, **dadurch gekennzeichnet, dass** eine Auswertung durch die Auswerteeinrichtung mittels multivarianter Datenanalyse durchgeführt wird.

6. Verfahren nach einem der Ansprüche 1 bis 5, **dadurch gekennzeichnet, dass** die Steuer/Regeleinrichtung einen Pulsbetrieb oder Modulationsbetrieb der Versorgung des thermoelektrischen Bauelements vornimmt.

7. Verfahren nach einem der Ansprüche 1 bis 6, **dadurch gekennzeichnet, dass** die Steuer-/Regeleinrichtung, den Versorgungsstrom des Peltier-Kühlers und/oder den Betriebstrom der Strahlungsquelle so steuert/regelt, dass die Änderung der Wellenlänge der Strahlungsquelle mit der Temperatur möglichst konstant ist und/oder ihre Intensität konstant ist oder sich gleichmäßig ändert.

8. Verfahren nach einem der Ansprüche 1 bis 7, **dadurch gekennzeichnet, dass** ein Array aus mehreren Strahlungsquellen mit unterschiedlichen Emissionswellenlängen gewählt wird.

9. Verfahren nach Anspruch 8, **dadurch gekennzeichnet, dass** die Emissionswellenlängen zueinander derart verschoben werden, dass die durch Modulation des Stroms durch das thermoelektrische Bauteil hervorgerufenen Abstimmbereiche im Wesentlichen nebeneinander liegen.

10. Verfahren nach Anspruch 8, **dadurch gekennzeichnet, dass** die Strahlungsquellen mit stark unterschiedliche Wellenlängen zur Erfassung von Gasen mit weit auseinander liegenden Banden abstrahlen.

11. Verfahren nach einem der Ansprüche 1 bis 10, **dadurch gekennzeichnet, dass** auf der Heißseite des Peltier-Kühlers zur Erhöhung der Kühlleistung und nutzbaren Temperaturdifferenz eine Kühlvorrichtung angeordnet wird.

12. Verfahren nach einem der Ansprüche 1 bis 11, **dadurch gekennzeichnet, dass** auf der Kaltseite des Peltier-Kühlers sein Substrat auf eine Dicke von 50 - 100 µm abgedünnt wird.

13. Verfahren nach einem der Ansprüche 1 bis 12, **dadurch gekennzeichnet, dass** die als Halbleiterlaser ausgebildete Strahlungsquelle mit einem Substrat versehen wird und das Substrat selbst die kalte Seite des Peltier-Kühlers (1) bildet oder abgedünnt wird.

14. Verfahren nach einem der Ansprüche 1 bis 12, **dadurch gekennzeichnet, dass** die als Halbleiterlaser ausgebildete Strahlungsquelle substratfrei auf die Kaltseite des Peltier-Kühlers aufgebracht wird.

15. Verfahren nach einem der Ansprüche 1 bis 14, **dadurch gekennzeichnet, dass** die Kaltseite des Peltier-Kühlers mit einer Vertiefung mit den Abmessungen der als Halbleiterlaser ausgebildeten Strahlungsquelle in der Größenordnung von 20 - 200 µm versehen wird, in der der Halbleiterlaser aufgebracht wird.

16. Verfahren nach einem der Ansprüche 1 bis 15, **dadurch gekennzeichnet, dass** gleichzeitig mehrere Gaskomponenten mit einem Array aus Peltier-Kühlern mit Strahlungsquellen bei unterschiedlichen Emissionswellen gemessen werden.

17. Verfahren nach einem der Ansprüche 1 bis 16, **dadurch gekennzeichnet, dass** der miniaturisierte Peltier-Kühler in Dünnschichttechnik hergestellt wird.

18. Verfahren nach Anspruch 1 bis 17, **dadurch gekennzeichnet, dass** auf der Kaltseite des Peltier-Kühlers (1) mindestens ein Temperatursensor und ein Heizelement angeordnet werden.

19. Verfahren nach einem der Ansprüche 1 bis 18, **dadurch gekennzeichnet, dass** auf der Kaltseite des Peltier-Kühlers eine keilförmige oder abgestufte Struktur vorgesehen wird, auf der ein Array gleichartiger Laser angeordnet wird.

20. Verfahren nach Anspruch 19, **dadurch gekennzeichnet, dass** für das Material der keilförmigen oder stufenförmigen Struktur eine geringe thermische Leitfähigkeit gewählt wird.

## Claims

1. A method for measuring at least one gas component of a gas present in a measuring space, comprising at least one radiation source which is matched with respect to its wavelength range to the gas component to be detected, at least one radiation detector which receives radiation emitted by the radiation source and passing through the gas in the measuring space and converts it into electrical signals, and an evaluating device (5) for evaluating the electrical signals with respect to the gas component, wherein, in order to change the wavelength emitted by the radiation source (2), the radiation source is mounted on a miniaturised thermoelectric component which is connected to a control/regulating device (6) for the variable adjustment of its electrical supply, **characterised in that** the control/regulating device is designed so as periodically to modulate the current through the thermoelectric component (1) and to modulate the current through the radiation source (2), in such a way that the change of the wavelength and of the intensity of the light source is performed such that it appears in a fast Fourier analysis as a fundamental component and the changes of the parameters to be measured in the gas, concentration and/or pressure and/or temperature, are extracted from the components of the higher harmonics, several gas absorption lines being covered with the change of the wavelength.

2. A method according to Claim 1, **characterised in that** a miniaturised Peltier cooler (1) is used as the thermoelectric component.

3. A method according to Claim 1 or Claim 2, **characterised in that** the detector (4) is selected from a photodiode, pyropile, thermopile, bolometer or MCT detector.

4. A method according to one of Claims 1 to 3, **characterised in that** a semiconductor laser, preferably a surface-emitting semiconductor laser, a quantum cascade laser, an edge-emitter with or without a DFB structure, or an LED is selected for the at least one radiation source (2).

5. A method according to one of Claims 1 to 4, **characterised in that** an evaluation is performed by the evaluating device by means of multivariate data analysis.

6. A method according to one of Claims 1 to 5, **characterised in that** the control/regulating device performs a pulse operation or modulation operation of the thermoelectric component's supply.

7. A method according to one of Claims 1 to 6, **characterised in that** the control/regulating device controls/regulates the supply current of the Peltier cooler and/or the operating current of the radiation source such that the change of the wavelength of the radiation source with the temperature is as constant as possible and/or its intensity is constant or changes uniformly.

8. A method according to one of Claims 1 to 7, **characterised in that** an array of several radiation sources with different emission wavelengths is selected.

9. A method according to Claim 8, **characterised in that** the emission wavelengths are shifted in relation to one another in such a way that the tuning ranges produced by modulation of the current by the thermoelectric component lie substantially adjacent to one another.

10. A method according to Claim 8, **characterised in that** the radiation sources emit with greatly varying wavelengths in order to detect gases with bands which lie far apart from one another.

11. A method according to one of Claims 1 to 10, **characterised in that** a cooling device is arranged on the hot side of the Peltier cooler to raise the cooling power and the usable temperature difference.

12. A method according to one of Claims 1 to 11, **characterised in that** on the cold side of the Peltier cooler, the substrate thereof is thinned down to a thickness of 50 - 100 µm.

13. A method according to one of Claims 1 to 12, **characterised in that** the radiation source in the form of a semiconductor laser is provided with a substrate and the substrate itself forms the cold side of the Peltier cooler (1) or is thinned down.

14. A method according to one of Claims 1 to 12, **characterised in that** the radiation source in the form of a semiconductor laser is mounted substrate-free on the cold side of the Peltier cooler.

15. A method according to one of Claims 1 to 14, **characterised in that** the cold side of the Peltier cooler is provided with a depression having the dimensions of the radiation source in the form of a semiconductor laser in the order of magnitude of 20 - 200 µm, in which depression the semiconductor laser is mounted.

16. A method according to one of Claims 1 to 15, **characterised in that** several gas components are measured simultaneously with an array of Peltier coolers with radiation sources at different emission waves.

17. A method according to one of Claims 1 to 16, **characterised in that** the miniaturised Peltier cooler is manufactured by the thin-film technique.

18. A method according to Claim 1 to 17, **characterised in that** at least one temperature sensor and one heating element are arranged on the cold side of the Peltier cooler (1).

19. A method according to one of Claims 1 to 18, **characterised in that** there is provided on the cold side of the Peltier cooler a wedge-shaped or stepped structure on which an array of similar lasers is arranged.

20. A method according to Claim 19, **characterised in that** a low thermal conductivity is selected for the material of the wedge-shaped or step-shaped structure.

## Revendications

1. Procédé pour mesurer au moins un composant gazeux d'un gaz présent dans une enceinte de mesure avec au moins une source de rayonnement dont la gamme de longueur d'onde est adaptée au composant gazeux à déceler, avec au moins un détecteur de rayonnement qui reçoit un rayonnement émis par la source de rayonnement et traversant le gaz dans l'enceinte de mesure, et le convertit en signaux électriques, et avec un dispositif d'interprétation (5) pour interpréter les signaux électriques relatifs au composant gazeux, dans lequel, pour modifier la longueur d'onde émise par la source de rayonnement (2), la source de rayonnement est appliquée sur un composant thermoélectrique miniaturisé qui est relié à un dispositif de commande/régulation (6) pour le réglage variable de son alimentation électrique, **caractérisé en ce que** le dispositif de commande/régulation est conçu pour moduler périodiquement le courant qui circule à travers le composant thermoélectrique (1) et pour moduler le courant qui circule à travers la source de rayonnement (2), de manière que la variation de la longueur d'onde ainsi que de l'intensité de la source lumineuse soit réalisée de façon qu'elle se produise dans le cas d'une analyse de Fourier rapide comme composante fondamentale et que les variations des paramètres à mesurer dans le gaz, concentration et/ou pression et/ou température, soient extraites des composantes des harmoniques supérieures, plusieurs lignes d'absorption de gaz étant balayées lors de la variation de la longueur d'onde.

2. Procédé selon la revendication 1, **caractérisé en ce qu'**on utilise un refroidisseur Peltier (1) miniaturisé comme composant thermoélectrique.

3. Procédé selon l'une quelconque des revendications 1 ou 2, **caractérisé en ce que** le détecteur (4) est choisi parmi une photodiode, une pyropile, une thermopile, un bolomètre ou un détecteur MCT.

4. Procédé selon l'une quelconque des revendications 1 à 3, **caractérisé en ce que** pour la au moins une source de rayonnement (2) on choisit un laser à semi-conducteur, de préférence un laser à semi-conducteur à émission par la surface, un laser à cascade quantique, un émetteur avec ou sans structure DFB ou une LED.

5. Procédé selon l'une quelconque des revendications 1 à 4, **caractérisé en ce qu'**il est procédé à une interprétation par le dispositif d'interprétation au moyen d'une analyse de données à variantes multiples.

6. Procédé selon l'une quelconque des revendications 1 à 5, **caractérisé en ce que** le dispositif de commande/régulation fonctionne avec un mode à impulsion ou à modulation de l'alimentation du composant thermoélectrique.

7. Procédé selon l'une quelconque des revendications 1 à 6, **caractérisé en ce que** le dispositif de commande/régulation commande/régule le courant d'alimentation du refroidisseur Peltier et/ou le courant de service de la source de rayonnement, de manière que la variation de la longueur d'onde de la source de rayonnement avec la température soit aussi constante que possible et/ou que son intensité soit constante ou varie uniformément.

8. Procédé selon l'une quelconque des revendications 1 à 7, **caractérisé en ce qu'**on choisit un ensemble de plusieurs sources de rayonnement avec des longueurs d'onde d'émission différentes.

9. Procédé selon la revendication 8, **caractérisé en ce que** les longueurs d'onde d'émission sont décalées les unes par rapport aux autres de manière que les plages d'accord, provoquées par la modulation du courant par le composant thermoélectrique, se situent sensiblement côte à côte.

10. Procédé selon la revendication 8, **caractérisé en ce que** les sources de rayonnement émettent avec des longueurs d'onde fortement différentes pour détecter des gaz avec des bandes très écartées les unes des autres.

11. Procédé selon l'une quelconque des revendications 1 à 10, **caractérisé en ce que** sur le côté chaud du refroidisseur Peltier, il est disposé un dispositif de refroidissement pour accroître la puissance de refroidissement et la différence de température utile.

12. Procédé selon l'une quelconque des revendications 1 à 11, **caractérisé en ce que** sur le côté froid du refroidisseur Peltier, son substrat est aminci à une épaisseur de 50 à 100 µm.

13. Procédé selon l'une quelconque des revendications 1 à 12, **caractérisé en ce que** la source de rayonnement, conçue comme laser à semi-conducteur, est pourvue d'un substrat et le substrat lui-même forme le côté froid du refroidisseur Peltier (1), ou est aminci.

14. Procédé selon l'une quelconque des revendications 1 à 12, **caractérisé en ce que** la source de rayonnement, conçue comme laser à semi-conducteur, est appliquée sans substrat sur le côté froid du refroidisseur Peltier.

15. Procédé selon l'une quelconque des revendications 1 à 14, **caractérisé en ce que** le côté froid du refroidisseur Peltier est pourvu d'un creux avec les dimensions de la source de rayonnement, conçue en tant que laser à semi-conducteur, d'un ordre de grandeur de 22 à 200 mm, dans lequel est appliqué le laser à semi-conducteur.

16. Procédé selon l'une quelconque des revendications 1 à 15, **caractérisé en ce que** plusieurs composants gazeux sont mesurés simultanément avec un ensemble de refroidisseurs Peltier avec des sources de rayonnement dont les longueurs d'émission sont différentes.

17. Procédé selon l'une quelconque des revendications 1 à 16, **caractérisé en ce que** le refroidisseur Peltier miniaturisé est réalisé avec la technique à couches minces.

18. Procédé selon les revendications 1 à 17, **caractérisé en ce que** sur le côté froid du refroidisseur Peltier (1) est disposée au moins une sonde de température et un élément chauffant.

19. Procédé selon l'une quelconque des revendications 1 à 18, **caractérisé en ce que** sur le côté froid du refroidisseur Peltier il est prévu une structure en forme de coin ou étagée sur laquelle est disposé un ensemble de lasers de même type.

20. Procédé selon l'une quelconque la revendication 19, **caractérisé en ce que** pour la structure en forme de coin ou étagée on choisit un matériau de faible conductivité thermique.
